# EUROPEAN PATENT SPECIFICATION

(11) **EP 2 768 135 B1**
(45) Date of publication and mention of the grant of the patent: **20.07.2022**
(21) Application number: 13155380.2
(22) Date of filing: 15.02.2013
(51) Int. Cl.: H02P 9/42, H02M 5/458, H02J 3/38

(54) **A hydroelectric power generation apparatus.**
Hydroelektrische Stromerzeugungsvorrichtung
Appareil de génération d'énergie hydroélectrique

(43) Date of publication of application: 20.08.2014
(73) Proprietor: ABB Schweiz AG, 5400 Baden (CH)
(72) Inventor: Marcolini, Marco, I-20127 Milano (IT)
(74) Representative: De Bortoli, Eros

(56) References cited:
- EP-A2- 0 220 492
- WO-A1-2010/082129
- CN-U- 202 455 089
- JP-A- S6 377 387

## Description

The present invention relates to a hydroelectric power generation apparatus, which is suitable for use in small hydroelectric power generation plants, particularly of the fluent water type. Small hydroelectric power generation plants (i.e. plants having a nominal power lower than 10000 kW) are quite widespread in country-side or mountain regions.

Typically these power generation plants are of the fluent water type, in which the water for actuating the turbines is withdrawn directly from a water bed (such as a river or a channel) where water continuously flows.

These plants typically comprise power generation apparatuses, in which each turbine is operatively connected with a synchronous generator that is electrically connected to the power distribution network. Patent document JP-S-6377387 A discloses a pump storage with an asynchronous generator connected to the supply over an AC-AC converter and working as motor and generator. Utility model CN 202 455 089 U suggests the use of AC-DC-AC converter for connecting the stator winding of an asynchronous generator to a supply grid, enabling the control of a direct driven asynchronous generator for wind power generation.

As is widely known, these plants have some drawbacks.

Generally, they are not provided with water flow regulations systems in order to ensure a constant flow of the water actuating the turbine. Their operation is thus very much influenced by seasonal variations of the available water flow rate.

As a consequence, being synchronized with the typical operating frequency of the power distribution grid, the power generation apparatuses of these plants must be disconnected from the power distribution network in case the turbine speed becomes too low. Otherwise, they would operate as electric motors, thereby adsorbing active electric power from the power distribution network.

Of course, this implies remarkable reductions of the overall energetic yield of these plants.

The power generation apparatuses of these plants generally comprise relatively complex and expensive regulation systems to ensure a proper operation of the synchronous generator, in particular during transient phases of the operating life of the turbine or when the rotational speed of the rotor is relatively low.

Further, said power generation apparatuses are generally of relatively difficult use and require frequent maintenance interventions, with a consequent increase of the industrial costs.

It is therefore an object of the present invention to provide a hydroelectric power generation apparatus that solves the above-mentioned problems.

More in particular, it is an object of the present invention to provide a hydroelectric power generation apparatus that can properly operate in presence of remarkable variations of the available flow rate of the water actuating the turbine.

As a further object, the present invention is aimed at providing a hydroelectric power generation apparatus that can be easily installed and operated.

Another object of the present invention is to provide a hydroelectric power generation apparatus that is relatively robust and reliable, thereby requiring a relatively small number of maintenance interventions.

Still another object of the present invention is to provide a hydroelectric power generation apparatus with reduced manufacturing costs.

These objects, together with other objects that will be more apparent from the subsequent description and from the accompanying drawings, are achieved, according to the invention, by a hydroelectric power generation apparatus according to the following claim 1 and the related dependent claims, which refer to preferred embodiments of the present invention.

Further characteristics and advantages of the present invention will be more apparent with reference to the description given below and to the accompanying figures, provided purely for explanatory and non-limiting purposes, wherein:
- Fig. 1 illustrates a block diagram schematically showing an exemplary embodiment of a hydroelectric power generation apparatus being not part of the present invention.
- Fig. 2 illustrates a block diagram schematically showing an embodiment of the hydroelectric power generation apparatus, according to the present invention;
- Fig. 3 illustrates a block diagram schematically showing a hydroelectric power generation plant comprising the hydroelectric power generation apparatus, according to the present invention;

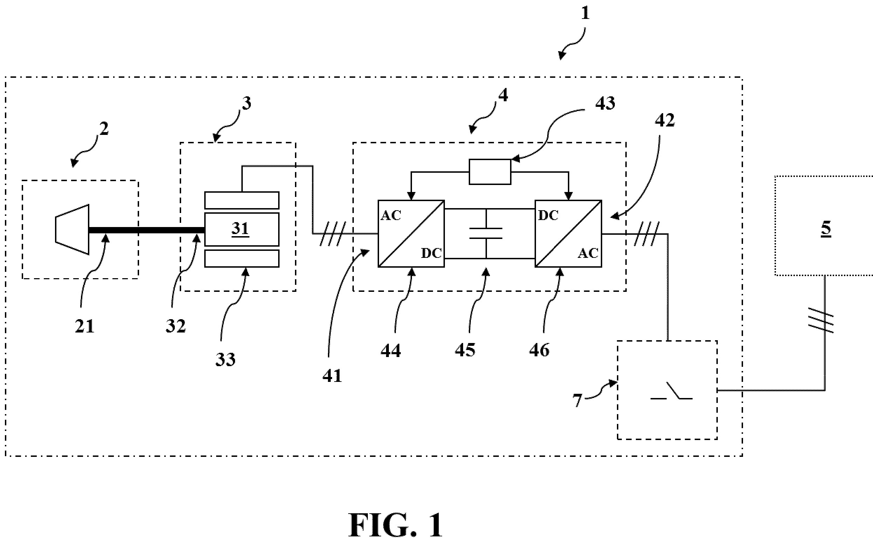

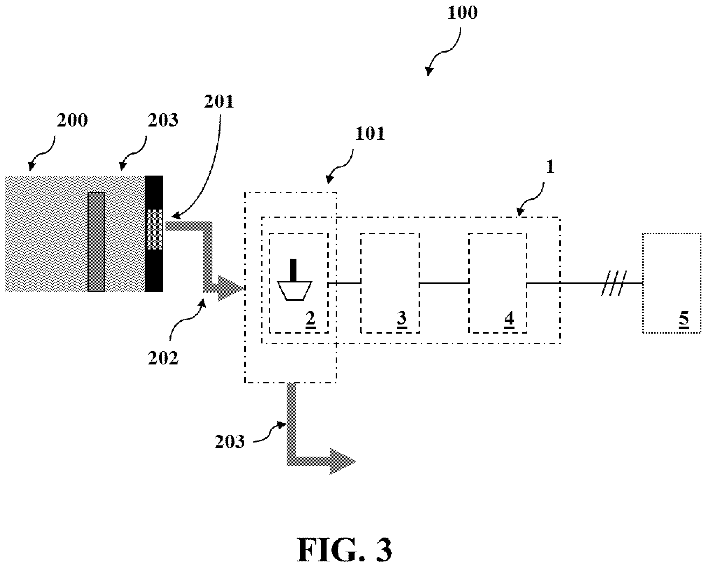

With reference to figures 1-3, the present invention relates to a hydroelectric power generation apparatus 1.

The apparatus 1 is quite suitable useful for installation in a hydroelectric power generation plant 100, in particular in a hydroelectric power generation plant of the fluent water type having a small size (i.e. nominal power lower than 10000 KW).

In this case, the hydroelectric power generation plant 100 is installed in the proximity of a water bed 200, in which water continuously flows.

The water bed 200 comprises an intake portion 203, at which an inlet duct 202 withdraws water from the water bed 200.

Advantageously, a grate 201 is positioned at the inlet portion of the inlet duct 202 to filter the water entering thereto.

The inlet duct 202 channels water towards a turbine chamber 101 of the plant 100. An outlet duct 203 channels water from the turbine chamber 101 to the external environment. Advantageously, the intake portion 203 is positioned at a given prevalence height with respect to the turbine chamber 101, so that water acquires kinetic energy while flowing along the inlet duct 202.

Of course, the apparatus 1 can be used in power generation plants that are differently arranged with respect to the one described above.

The hydroelectric power generation apparatus 1 comprises at least a hydro turbine 2, which is positioned within the turbine chamber 101, so as to be actuated by the water provided by the inlet duct 202.

The turbine 2 may be a turbine of known type, preferably of the Kaplan, Francis or Coclea type.

The turbine 2 has a turbine shaft 21 that is rotated by the turbine movement, in a conventional manner.

Typical values for the rotational speed of the turbine shaft 21 are within a range of 300-1000 rpm for a Kaplan turbine or 100-400 rpm for a Francis turbine.

The apparatus 1 comprises at least an asynchronous generator 3, which is operatively associated to the turbine 2.

The generator 1 has a rotor winding 31, which may be of conventional type, for example of the squirrel cage type or wounded type.

The rotor winding 31 is solidly connected to a rotor shaft 32 that is mechanically connected with the turbine shaft 21, so as to be rotatably actuated by this latter.

The rotor shaft 32 may be directly connected with the turbine shaft 21, so as to rotate at the same rotational speed of this latter. To this aim, conventional mechanical connection means (not shown) may be suitably used.

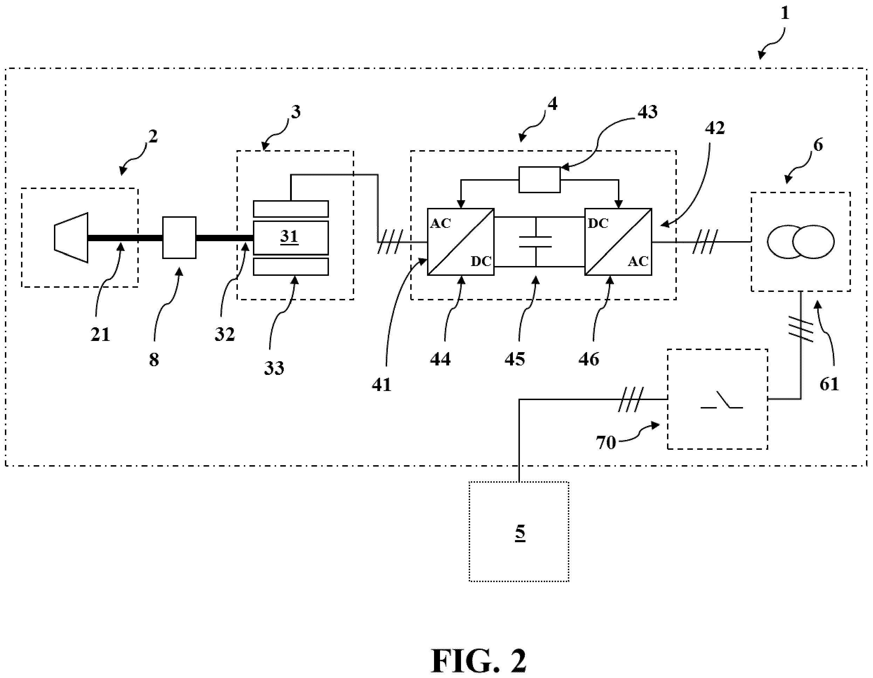

According to the invention (figure 2), the apparatus 1 comprises a gear mechanism 8 that is mechanically coupled with the turbine shaft 21 and the rotor shaft 32.

According to the invention, the gear mechanism 8 is adapted to increase the rotational speed of the movement transmitted by the turbine shaft 21 to the rotor shaft 32.

Typical values for the transmission ratio of the gear mechanism 8 may be comprised in a range of 1,5-3,0 depending on the type of the adopted turbine 2.

The rotational speed of rotor shaft 32 may thus typically be comprised in a range of 450-1500 rpm when a Kaplan turbine is used or 300-1200 rpm for a Francis turbine.

The generator 1 has a stator winding 33 that is operatively coupled to the rotor winding 31, so as to form an electromagnetic induction machine that is capable of generating an active electric power, when the rotor winding 31 moves with respect to the stator winding 33.

The apparatus 1 comprises also at least an AC-AC converter 4, which is operatively associated to the asynchronous generator 3.

The AC-AC converter 4 has a first port 41 that is electrically connected with the stator winding 33 and a second port 42 that can be electrically connected with an electric power distribution grid 5, e.g. the bar bus of an electric power distribution network.

The AC-AC converter 4 is advantageously configured to perform a bi-directional transmission of electric power between the ports 41, 42.

In other words, the AC-AC converter 4 is capable of transmitting electric power from the asynchronous generator 2 towards the power distribution grid 5, and viceversa.

In particular, the AC-AC converter 4 is adapted to receive active electric power from the asynchronous generator 3 (at the port 41) and to transmit active electric power (from the port 42) towards the power distribution grid 5.

The active electric power received by the port 41 of the AC-AC converter 4 is generated by the electromagnetic induction machine formed by the rotor and stator windings 31, 33.

The AC-AC converter 4 is also adapted to receive reactive electric power from the power distribution grid 5 (at the port 42) and to transmit reactive electric power (from the port 41) towards the asynchronous generator 3.

The reactive electric power transmitted by the port 41 of the AC-AC converter 4 is adsorbed by the asynchronous generator 3 to excite the rotor and stator windings 31, 33.

According to the invention, the ports 41, 42 of the AC-AC converter 4 receive/transmit electric power respectively at a first and second operating frequency f₁, f₂.

The first operating frequency f₁ can vary and it is the operating frequency of the electric power generated or adsorbed by the asynchronous generator 3, the value of which depends on the rotational speed of the rotor shaft 32 and on the number of poles of the electromagnetic induction machine. Typical values for the first operating frequency f₁ may be comprised in a range of 10-50 Hz.

The second operating frequency f₂ is basically predefined and it is the typical operating frequency of the power distribution grid 5, namely the mains frequency (50 or 60 Hz).

The second operating frequency f₂ is thus higher or equal than the first operating frequency f₁.

According to the invention, the AC-AC converter 4 comprises electronic means 44, 45, 46 that are configured to transmit electric power from the port 41 towards the port 42, and viceversa.

According to the invention, the AC-AC converter 4 has a substantially symmetrical circuital structure that comprises a first switching stage 44, which includes the port 41 and is electrically connected in parallel with a capacitive stage 45 and with a second switching stage 46 that includes the port 42.

The switching stage 44 receives a first AC voltage (having the frequency f₁) at the port 41 and converts it into a second DC voltage, which charges the capacitive stage 45. By adsorbing electrical energy from the capacitive stage 45, the second DC voltage is converted by the switching stage 46 into a third AC voltage (at the frequency f₂) that is provided at the port 42. The electronic means 44, 45, 46 are adapted to reverse the electric power conversion process described above.

In this case, the switching stage 46 receives the third AC voltage (at the frequency f₂) at the port 42 and converts it into the second DC voltage, which is then converted by the switching stage 44 into the first AC voltage (at the frequency f₁) that is provided at the port 41.

The AC-AC converter 4 is therefore capable of transmitting electric power between the asynchronous generator 2 and the power distribution grid 5 in a bi-directional manner.

According to the invention, the AC-AC converter 4 is of the active front end type.

Preferably, the AC-AC converter 4 comprises a control arrangement 43 for controlling the transmission of electric power during transient periods of the operating life of the turbine 2, in particular when the frequency f₁ is very lower than the frequency f₂.

As an example, the control arrangement 43 may be a flying start control device included in the control unit of the AC-AC converter 4.

The power distribution grid 5 may operate at low voltages (i.e. AC voltages lower than 1kV) or medium voltages (i.e. AC voltages comprises between 1kV and 70kV).

For low voltage (LV) applications, the port 42 of the AC-AC converter 4 may be directly electrically connected with the power distribution grid 5 (i.e. without intermediate transformer stages).

In this case, preferably, the apparatus 1 comprises a first circuit breaker 7 that is electrically connected to the port 42 and to the power distribution grid 5 (figure 1).

For medium voltage (MV) applications, the apparatus 1 preferably comprises a LV/MV power transformer 6 that is electrically connected to the port 42 and that can be electrically connected to the power distribution grid 5.

Conveniently, the apparatus 1 may comprise a second circuit breaker 70 that is electrically connected between output terminals 61 of the power transformer 6 (at an opposite side with respect to the port 42) and the power distribution grid 5 (figure 2).

It is apparent from the above that the hydroelectric power generation apparatus, according to the invention, provides a number of advantages with respect to similar apparatuses of known type.

The adoption of an asynchronous generator is quite advantageous, since this kind of electric machine is more robust with respect to traditional synchronous generators, thereby requiring a reduced number of maintenance interventions.

Further, the asynchronous generator can be operated over a wide operating speed range and is quite easy to use, without the need of arranging dedicated synchronization devices or relays.

The hydroelectric power generation apparatus, according to the invention, is quite flexible in operation and is capable of properly functioning even when relevant variations in operating regime of the turbine, e.g. due to seasonal variations of the available water to actuate the turbine.

The hydroelectric power generation apparatus, according to the invention, has a relatively simple structure that can be easily installed on the field, at relatively low costs.

The hydroelectric power generation apparatus, according to the invention, is of relatively easy industrial production, at competitive costs with respect to traditional hydroelectric power generation systems.

## Claims

1. A hydroelectric power generation apparatus (1) comprising:
- a hydro turbine (2) having a rotary turbine shaft (21);
- an asynchronous generator (3) comprising a rotor shaft (32) that is mechanically connected with said turbine shaft to be rotatably actuated by said turbine shaft, a rotor winding (31) that is solidly connected to said rotor shaft, and a stator winding (33) that is operatively coupled to said rotor winding;
- an AC-AC converter (4), which has a first port (41) that is electrically connected with said stator winding (33) and a second port (42) that is electrically connectable with an electric power distribution grid (5), said AC-AC converter (4) comprising electronic means (44, 45, 46) to transmit electric power from said first input port (41) towards said second port (42), and viceversa;
wherein said electronic means comprises a first switching stage (44), a capacitive stage (35) and a second switching stage (45), which are electrically connected in parallel,
wherein said electronic means are adapted to operate in a mode, according to which:
- said first switching stage (44) receives a first AC voltage at a first frequency (f₁) and converts said first AC voltage in a DC voltage that charges said capacitive stage (45);
- said second switching stage (46) converts said DC voltage into a third AC voltage at a second frequency (f₂);
wherein said electronic means are adapted to operate in another mode, according to which:
- said second switching stage (46) receives said third AC voltage at said second frequency (f₂) and converts said third AC voltage in said DC voltage;
- said first switching stage (44) converts said DC voltage in said first AC voltage at said first frequency (f₁);
wherein said second operating frequency (f₂) is predefined and higher or equal than said first operating frequency (f₁), which is variable;
wherein said AC-AC converter (4) is of the active front end type having a symmetrical circuital structure comprising said first switching stage (44) that includes said first port (41), said capacitive stage (35) and said second switching stage (45) that includes said second port (42),
**characterised in that** said hydroelectric power generation apparatus further comprises a gear mechanism (8) mechanically coupled with said turbine shaft (21) and said rotor shaft (32), said gear mechanism increasing the rotational speed of the movement transmitted by said turbine shaft to said rotor shaft.

2. A hydroelectric power generation apparatus, according to claim 1, **characterised in that** said AC-AC converter (4) comprises a control arrangement (43) to control the transmission of electric power during transient periods of the operating life of said turbine (2).

3. A hydroelectric power generation apparatus, according to one or more of the previous claims, **characterised in that** said AC-AC converter (4) receives active electric power from said asynchronous generator (3) and transmits active electric power to said electric power distribution grid (5).

4. A hydroelectric power generation apparatus, according to one or more of the previous claims, **characterised in that** said AC-AC converter (4) receives reactive electric power from said electric power distribution grid (5) and transmits reactive electric power to said asynchronous generator (3).

5. A hydroelectric power generation apparatus, according to one or more of the previous claims, **characterised in that** the second port (42) of said AC-AC converter is directly electrically connectable with said electric power distribution grid (5).

6. A hydroelectric power generation apparatus, according to claim 5, **characterised in that** it comprises a first circuit breaker (7) that is electrically connected between the second port (42) of said AC-AC converter and said electric power distribution grid (5).

7. A hydroelectric power generation apparatus, according to one or more of the claims from 1 to 4, **characterised in that** it comprises a LV/MV power transformer (6) that is electrically connected to the second port (42) of said AC-AC converter.

8. A hydroelectric power generation apparatus, according to claim 7, **characterised in that** it comprises a second circuit breaker (70) that is electrically connected between the output terminals (61) of said power transformer (6), at an opposite side with respect to said second port (42).

9. A hydroelectric power generation plant (100) **characterised in that** it comprises a hydroelectric power generation apparatus (1), according to one or more of the previous claims.

10. A hydroelectric power generation plant (100), according to claim 9, **characterised in that** it is of the water fluent type.

11. A hydroelectric power generation plant (100), according to claim 9 or 10, **characterised in that** it has a nominal power lower than 10000 KW.

## Patentansprüche

1. Hydroelektrische Stromerzeugungsvorrichtung (1), die Folgendes umfasst:
- eine Wasserturbine (2) mit einer rotierenden Turbinenwelle (21);
- einen Asynchrongenerator (3) mit einer Rotorwelle (32), die mechanisch mit der Turbinenwelle verbunden ist, um durch die Turbinenwelle in Rotation versetzt zu werden, eine Rotorwicklung (31), die fest mit der Rotorwelle verbunden ist, und eine Statorwicklung (33), die mit der Rotorwicklung wirkverbunden ist;
- einen AC-AC-Umrichter (4), der einen ersten Anschluss (41) aufweist, der elektrisch mit der Statorwicklung (33) verbunden ist, und einen zweiten Anschluss (42), der elektrisch mit einem Stromverteilungsnetz (5) verbindbar ist, wobei der AC-AC-Umrichter (4) elektronische Mittel (44, 45, 46) umfasst, um elektrischen Strom von dem ersten Eingangsanschluss (41) zu dem zweiten Anschluss (42) und umgekehrt zu übertragen;
wobei die elektronischen Mittel eine erste Schaltstufe (44), eine kapazitive Stufe (35) und eine zweite Schaltstufe (45) umfassen, die elektrisch parallel geschaltet sind,
wobei die elektronischen Mittel so ausgelegt sind, dass sie in einem Modus arbeiten, gemäß dem:
- die erste Schaltstufe (44) eine erste Wechselspannung mit einer ersten Frequenz (f₁) empfängt und diese erste Wechselspannung in eine Gleichspannung umwandelt, die die kapazitive Stufe (45) lädt;
- die zweite Schaltstufe (46) die Gleichspannung in eine dritte Wechselspannung mit einer zweiten Frequenz (f₂) umwandelt;
wobei die elektronischen Mittel so ausgelegt sind, dass sie in einer anderen Betriebsart arbeiten können, gemäß der:
- die zweite Schaltstufe (46) die dritte Wechselspannung mit der zweiten Frequenz (f₂) empfängt und die dritte Wechselspannung in die Gleichspannung umwandelt;
- die erste Schaltstufe (44) die Gleichspannung in die erste Wechselspannung mit der ersten Frequenz (f₁) umwandelt;
wobei die zweite Betriebsfrequenz (f₂) vordefiniert und höher oder gleich der ersten Betriebsfrequenz (f₁) ist, die variabel ist;
wobei der AC-AC-Umrichter (4) vom aktiven Front-End-Typ ist und eine symmetrische Schaltungsstruktur aufweist, die die erste Schaltstufe (44), die den ersten Anschluss (41) aufweist, die kapazitive Stufe (35) und die zweite Schaltstufe (45), die den zweiten Anschluss (42) aufweist, umfasst,
**dadurch gekennzeichnet, dass** die hydroelektrische Stromerzeugungsvorrichtung ferner einen Getriebemechanismus (8) umfasst, der mechanisch mit der Turbinenwelle (21) und der Rotorwelle (32) gekoppelt ist, der Getriebemechanismus die Rotationsgeschwindigkeit der von der Turbinenwelle auf die Rotorwelle übertragenen Bewegung erhöht.

2. Hydroelektrische Stromerzeugungsvorrichtung gemäß Anspruch 1, **dadurch gekennzeichnet, dass** der AC-AC-Umrichter (4) eine Steueranordnung (43) umfasst, um die Übertragung von elektrischer Energie während der Übergangsperioden der Betriebsdauer der Turbine (2) zu steuern.

3. Hydroelektrische Stromerzeugungsvorrichtung gemäß einem oder mehreren der vorhergehenden Ansprüche, **dadurch gekennzeichnet, dass** der AC-AC-Umrichter (4) elektrische Wirkleistung von dem Asynchrongenerator (3) empfängt und elektrische Wirkleistung an das Stromverteilungsnetz (5) überträgt.

4. Hydroelektrische Stromerzeugungsvorrichtung gemäß einem oder mehreren der vorhergehenden Ansprüche, **dadurch gekennzeichnet, dass** der AC-AC-Umrichter (4) elektrische Blindleistung aus dem Stromverteilungsnetz (5) empfängt und elektrische Blindleistung an den Asynchrongenerator (3) überträgt.

5. Hydroelektrische Stromerzeugungsvorrichtung gemäß einem oder mehreren der vorhergehenden Ansprüche, **dadurch gekennzeichnet, dass** der zweite Anschluss (42) des AC-AC-Umrichters direkt elektrisch mit dem Stromverteilungsnetz (5) verbunden werden kann.

6. Hydroelektrische Stromerzeugungsvorrichtung gemäß Anspruch 5, **dadurch gekennzeichnet, dass** sie einen ersten Leistungsschalter (7) umfasst, der elektrisch zwischen dem zweiten Anschluss (42) des AC-AC-Umrichters und dem Stromverteilungsnetz (5) angeschlossen ist.

7. Hydroelektrische Stromerzeugungsvorrichtung gemäß einem oder mehreren der Ansprüche 1 bis 4, **dadurch gekennzeichnet, dass** sie einen LV/MV-Leistungstransformator (6) umfasst, der elektrisch mit dem zweiten Anschluss (42) des AC-AC-Umrichters verbunden ist.

8. Hydroelektrische Stromerzeugungsvorrichtung gemäß Anspruch 7, **dadurch gekennzeichnet, dass** sie einen zweiten Leistungsschalter (70) umfasst, der elektrisch zwischen den Ausgangsklemmen (61) des Leistungstransformators (6) auf einer dem zweiten Anschluss (42) gegenüberliegenden Seite angeschlossen ist.

9. Hydroelektrische Stromerzeugungsanlage (100), **dadurch gekennzeichnet, dass** sie eine hydroelektrische Stromerzeugungsvorrichtung (1) gemäß einem oder mehreren der vorhergehenden Ansprüche umfasst.

10. Hydroelektrische Stromerzeugungsanlage (100) gemäß Anspruch 9, **dadurch gekennzeichnet, dass** sie vom Fließwassertyp ist.

11. Hydroelektrische Stromerzeugungsanlage (100) gemäß Anspruch 9 oder 10, **dadurch gekennzeichnet, dass** sie eine Nennleistung von weniger als 10000 kW hat.

## Revendications

1. Appareil de génération d'énergie hydroélectrique (1) comprenant :
- une turbine hydroélectrique (2) ayant un arbre de turbine rotatif (21) ;
- un générateur asynchrone (3) comprenant un arbre de rotor (32) qui est mécaniquement raccordé audit arbre de turbine pour être actionné de manière rotative par ledit arbre de turbine, un enroulement de rotor (31) qui est solidement raccordé audit arbre de rotor, et un enroulement de stator (33) qui est couplé opérationnellement audit enroulement de rotor ;
- un convertisseur CA-CA (4), qui présente un premier port (41) connecté électriquement audit enroulement de stator (33) et un second port (42) qui peut être connecté électriquement à un réseau de distribution d'énergie électrique (5), ledit convertisseur CA-CA (4) comprenant des moyens électroniques (44, 45, 46) pour transmettre une énergie électrique depuis ledit premier port d'entrée (41) vers ledit second port (42), et vice versa ;
dans lequel lesdits moyens électroniques comprennent un premier étage de commutation (44), un étage capacitif (35) et un deuxième étage de commutation (45), lesquels sont connectés électriquement en parallèle,
dans lequel lesdits moyens électroniques sont conçus pour fonctionner dans un mode selon lequel :
- ledit premier étage de commutation (44) reçoit une première tension CA à une première fréquence (f₁) et convertit ladite première tension CA en une tension CC qui charge ledit étage capacitif (45) ;
- ledit deuxième étage de commutation (46) convertit ladite tension CC en une troisième tension CA à une deuxième fréquence (f₂) ;
dans lequel lesdits moyens électroniques sont conçus pour fonctionner dans un autre mode selon lequel :
- ledit deuxième étage de commutation (46) reçoit ladite troisième tension CA à ladite deuxième fréquence (f₂) et convertit ladite troisième tension CA en ladite tension CC ;
- ledit premier étage de commutation (44) convertit ladite tension CC en ladite première tension CA à ladite première fréquence (f₁) ;
dans lequel ladite deuxième fréquence de fonctionnement (f₂) est prédéfinie et supérieure ou égale à ladite première fréquence de fonctionnement (fi), laquelle est variable ;
dans lequel ledit convertisseur CA-CA (4) est du type frontal actif ayant une structure de circuits symétriques comprenant ledit premier étage de commutation (44) qui comporte ledit premier port (41), ledit étage capacitif (35) et ledit deuxième étage de commutation (45) qui comporte ledit second port (42),
**caractérisé en ce que** ledit appareil de génération d'énergie hydroélectrique comprend en outre un mécanisme d'engrenage (8) couplé mécaniquement avec ledit arbre de turbine (21) et ledit arbre de rotor (32), ledit mécanisme d'engrenage augmentant la vitesse de rotation du mouvement transmis par ledit arbre de turbine audit arbre de rotor.

2. Appareil de génération d'énergie hydroélectrique, selon la revendication 1, **caractérisé en ce que** ledit convertisseur CA-CA (4) comporte un dispositif de commande (43) pour commander la transmission d'énergie électrique pendant des périodes transitoires de la vie opérationnelle de ladite turbine (2).

3. Appareil de génération d'énergie hydroélectrique, selon une ou plusieurs des revendications précédentes, **caractérisé en ce que** ledit convertisseur CA-CA (4) reçoit une énergie électrique active depuis ledit générateur asynchrone (3) et transmet une énergie électrique active audit réseau de distribution d'énergie électrique (5).

4. Appareil de génération d'énergie hydroélectrique, selon une ou plusieurs des revendications précédentes, **caractérisé en ce que** ledit convertisseur CA-CA (4) reçoit une énergie électrique réactive depuis ledit réseau de distribution d'énergie électrique (5) et transmet une énergie électrique réactive audit générateur asynchrone (3).

5. Appareil de génération d'énergie hydroélectrique, selon une ou plusieurs des revendications précédentes, **caractérisé en ce que** le second port (42) dudit convertisseur CA-CA peut être directement connecté électriquement audit réseau de distribution d'énergie électrique (5).

6. Appareil de génération d'énergie hydroélectrique, selon la revendication 5, **caractérisé en ce qu'**il comprend un premier disjoncteur (7) qui est connecté électriquement entre le second port (42) dudit convertisseur CA-CA et ledit réseau de distribution d'énergie électrique (5).

7. Appareil de génération d'énergie hydroélectrique, selon une ou plusieurs des revendications 1 à 4, **caractérisé en ce qu'**il comprend un transformateur de puissance BT/MT (6) qui est connecté électriquement au second port (42) dudit convertisseur CA-CA.

8. Appareil de génération d'énergie hydroélectrique, selon la revendication 7, **caractérisé en ce qu'**il comprend un second disjoncteur (70) qui est connecté électriquement entre les bornes de sortie (61) dudit transformateur de puissance (6), au niveau d'un côté opposé par rapport audit second port (42).

9. Centrale hydroélectrique (100) **caractérisée en ce qu'**elle comprend un appareil de génération d'énergie hydroélectrique (1), selon une ou plusieurs des revendications précédentes.

10. Centrale hydroélectrique (100), selon la revendication 9, **caractérisée en ce qu'**elle est du type à eau fluide.

11. Centrale hydroélectrique (100), selon la revendication 9 ou 10, **caractérisée en ce qu'**elle a une puissance nominale inférieure à 10000 KW.
